# EUROPÄISCHE PATENTSCHRIFT

(11) **EP 3 106 124 B1**
(45) Veröffentlichungstag und Bekanntmachung des Hinweises auf die Patenterteilung: **04.09.2019**
(21) Anmeldenummer: 15172603.1
(22) Anmeldetag: 17.06.2015
(51) Int. Cl.: A61C 13/15

(54) **LICHTHÄRTGERÄT**
LIGHT HARDENING DEVICE
APPAREIL DE DURCISSEMENT À LA LUMIÈRE

(43) Veröffentlichungstag der Anmeldung: 21.12.2016
(73) Patentinhaber: Ivoclar Vivadent AG, 9494 Schaan (LI)
(72) Erfinder: Tommasini, Dario, 7302 Mastrils (CH)
(74) Vertreter: Baronetzky, Klaus

(56) Entgegenhaltungen:
- CN-U- 203 722 638
- DE-A1-102014 224 026
- FR-A1- 2 805 148
- US-A1- 2007 259 309

## Beschreibung

Die Erfindung betrifft ein Lichthärtgerät gemäß dem Oberbegriff von Anspruch 1.

Es ist seit längerem bekannt, dass Lichthärtgeräte, die je aus einem Handstück und einer Basisstation bestehen, kalibriert werden müssen, da das optische System des Lichthärtgeräts, wie es in dem Handstück vorgesehen ist, Exemplarsteuerungen aufweisen kann.

Hierzu gehört sowohl die Lichtquelle, die meist aus einer Mehrzahl von LED-Chips besteht, die nebeneinander angeordnet sind und gemeinsam Licht emittieren, als auch der Lichtleitstab, aber auch beispielsweise eine Sammellinse, die zwischen diesen vorgesehen ist, oder aber auch ein Zusatzaufsatz, der auf den Lichtleitstab vorne vorgesehen ist.

Lichtleitstäbe sind zudem häufig austauschbar, um ein Sterilisieren beispielsweise per Autoklav zu ermöglichen, und jeder Lichtleitstab weist eine spezielle Durchlasscharakteristik auf, so dass auch insofern Exemplarsteuerungen vorliegen.

Um ein konstantes Lichthärtergebnis zu erzielen, müssen Lichthärtgeräte daher kalibriert, und auf parametrisiert werden.

Andererseits steht für Bedienelemente gerade an dem Handstück nur ein begrenzter Raum zur Verfügung. Bei pistolenförmigen, aber auch bei stabförmigen Lichthärtgeräten und deren Handstücken ist meist ein Auslöseknopf vorgesehen, und eine Zusatz-Bedienfunktion kann durch längeres Drücken oder mehrmaliges kurzzeitiges Drücken des Auslöseknopfes bereitgestellt werden.

Ferner ist ein Anzeigeelement in Form eines räumlich recht begrenzten LCD-Displays vorgesehen, das bestimmte Basisinformationen dem Benutzer zur Verfügung stellt, und gegebenenfalls auch Anzeige LEDs, die den Lichthärtvorgang visualisieren.

Für die Übermittlung von Informationen zwischen dem Lichthärtgerät und der zugehörigen Basisstation ist es bereits gemäß der DE 103 19 010 B4 oder der DE10 2014 224 026 A1 vorgesehen, die Lade-Steckkontakte für das Aufladen des Akkumulators des Handstücks, oder gegebenenfalls zusätzliche Kontakte, vorzusehen, über die Informationen zwischen Lichthärtgerät und Handstück übermittelbar sein sollen.

Diese Art der Datenübertragung ist bei Handstücken in Pistolenform grundsätzlich gut geeignet. Bei Handstücken in Stiftform sind die Ladekontakte meist an der Unterseite des Handstücks vorgesehen und sollen an entsprechenden Gegenkontakten an der Ladeschale der Basisstation anliegen. Diese recht freie Lagerung ermöglicht zwar ein recht zuverlässiges Aufladen, auch wenn es bei Erschütterungen der Basisstation zu kurzzeitigen Unterbrechungen der Kontaktierung kommt; diese schaden dem Ladezyklus nicht. Bei Datenübertragung kann es jedoch zu Störungen kommen, die ohne entsprechende Plausibilitätskontrollen und dergleichen die Zuverlässigkeit der Kalibrierung und Parametrisierung des Handstücks beeinträchtigen können.

Demgegenüber liegt der Erfindung die Aufgabe zugrunde, ein Lichthärtgerät gemäß dem Oberbegriff von Anspruch 1 zu schaffen, das zuverlässiger kalibrierbar und/oder parametrisierbar ist, gerade wenn es in Stiftform vorliegt.

Diese Aufgabe wird erfindungsgemäß durch Anspruch 1 gelöst. Vorteilhafte Weiterbildungen ergeben sich aus den Unteransprüchen.

Erfindungsgemäß ist es besonders günstig, dass durch die bidirektionale optische Kommunikation eine Unempfindlichkeit gegenüber Kontaktschwierigkeiten gegeben ist. Besonders günstig ist es, dass die verwendete Lichtquelle für das Lichthärten, die Licht in einem Hauptwellenlängenbereich emittiert, gleichzeitig als Übertragungsmedium eingesetzt wird, um eine zuverlässige Übertragung zu einem Lichtsensor an der Basisstation zu ermöglichen. Bevorzugt ist die Lichtquelle mit LED-Chips bestückt, wobei aber auch Laserdioden alternativ eingesetzt werden können.

Zur Übertragung von Informationen wird das emittierte Signal als Trägersignal moduliert, sei es per Frequenzmodulation, Amplitudenmodulation oder Pulsbreitenmodulation. In dieser Ausgestaltung ist es vorgesehen, dass die Kommunikation basierend auf diesem Trägersignal bidirektional erfolgt, wobei insbesondere zwei Trägersignale unterschiedlicher Frequenz eingesetzt werden.

Hierdurch ist ein erheblicher Störabstand der Signalübertragung gewährleistet, gerade auch in Hinblick auf die recht starke Lichtquelle. Die bidirektionale Kommunikation bedingt eine entsprechende Lichtquelle an der Basisstation, gepaart mit einem Sensor in dem Handstück, der auch zu anderen Zwecken einsetzbar ist. Die Lichtquelle an der Basisstation kann deutlich, beispielweise um drei Viertel, weniger stark ausgebildet sein als die Lichtquelle im Handstück, zumal in günstiger Ausgestaltung eine Führung für das vordere Ende des Lichtleitstabs des Handstücks vorgesehen sein kann, die gewährleistet, dass das vordere Ende an der übertragungsgünstigsten Stelle, also beispielsweise knapp oberhalb der Basisstation-Lichtquelle - angeordnet ist, wenn die bidirektionale Kommunikation stattfindet.

Erfindungsgemäß besonders günstig ist es, dass mit der bidirektionalen Kommunikation, die auch kurzerhand automatisch beim Einlegen des Handstücks in die Ladeschale der Basisstation gestartet kann, ein Abgleich und gegebenenfalls eine Synchronisation zwischen Basisstation und Handstück erfolgen kann. Insbesondere lassen sich seltener benötigte Parameter lediglich in der Basisstation für das entsprechende Handstück speichern, so dass sie bei Bedarf zur Verfügung stehen und über das Bedienelement des Handstücks geändert bzw. abgerufen werden können.

In weiterer vorteilhafter Ausgestaltung ist es vorgesehen, die Basisstation mit einem zusätzlichen manuellen betätigbaren Bedienelement zu versehen, beispielsweise einem Auslöseknopf. Bei Betätigung dieses wird in einen Programmiermodus und/oder einen Kalibriermodus umgeschaltet, so dass beispielsweise auch neue Belichtungszeiten programmiert werden können, die Anzahl der Ladezyklen des Akkumulators des Handstücks geprüft werden kann, oder dessen Leistungsfähigkeit über einen kurzen Testlauf mit der Ermittlung von ΔU : Δt bei einem vorgegebenem Stromwert I ermittelt werden kann .

Eine weitere Möglichkeit für die Funktionsbelegung des zusätzlichen Bedienelements ist beispielsweise, dem Handstück zu vermitteln, dass der Lichtleitstab gewechselt wurde. Das Handstück kann dann automatisch in einen Kalibriermodus geschaltet werden, mit welchem der zweite Sensor die Lichtabgabe durch die erste Lichtquelle automatisch erfasst und eine Nennleistung als Sollleistung einstellt.

Ferner kann in diesem Modus auch eine etwaige Verschmutzung des vorderen Ende des Lichtleitstabs - oder ein Verstauben an seinem rückwärtigen Ende - festgestellt werden, das sich in einer Verminderung der Lichtleistung auswirkt. Ebenso können gegebenenfalls vorliegende Risse des Lichtleitstabs, die zu einer Verminderung der Lichtleistung führen, festgestellt werden.

Insofern liegt eine Besonderheit des erfindungsgemäßen Lichthärtgeräts darin, dass der zweite Sensor auf die Nennleistung der ersten Lichtquelle abgestimmt ist und insofern in vorteilhafter Ausgestaltung sowohl im Analogbereich empfindlich ist, also die genaue gegebene Lichtleistung feststellen kann, als auch ausreichend schnell ist, um ein moduliertes Signal, entsprechend der Modulation für die Datenkommunikation, zu erfassen. Da die zu übermittelnde Datenmenge begrenzt ist - es müssen keine Bilder übertragen werden -, reicht in der Regel eine Grenzfrequenz des Systems Lichtquelle/Lichtsensor, einschließlich der zugehörigen Ansteuer- und Auswertschaltkreise, aus, die eine Datenrate von 100KB/s erlaubt. Daher können vergleichsweise preisgünstige Bauteile verwendet werden.

In weiterer vorteilhafter Ausgestaltung ist es vorgesehen, die Basisstation mit einem Internetanschluss zu verbinden. Bevorzugt ist dann ein Virenschutzprogramm in der Steuervorrichtung der Basisstation installiert, das über den Internetanschluss regelmäßig aktualisierbar ist.

Auch weitere Softwaremodule lassen sich dann ohne weiteres aktualisieren, und es ist auch möglich, zu Servicezwecken das Handstück über die Basisstation überprüfen zu lassen, beispielsweise um eine erforderliche Wartung vorzunehmen, oder ein Ersatzteil zu bestellen.

In einer weiter modifizierten Ausgestaltung der Basisstation weist diese eine Anzeigevorrichtung in Form eines LCD-Displays auf, die über geeignete Bedienelemente, beispielsweise per berührungsempfindlichen Bildschirm, bedienbar ist und beliebige hierfür geeignete Steuerfunktionen durchführen kann.

Hierbei lässt sich die Tatsache günstig ausnutzen, dass das Gehäuse der Basisstation meist größer als das Gehäuse des Handstücks ist, so dass mehr Platz für eine ergonomisch günstige Bedienung zur Verfügung steht.

Es versteht sich, dass bei dieser Ausgestaltung auch eine Programmierung des Handstücks über die Bedieneinheit an der Basisstation möglich ist, wobei die zu übermittelnden Daten dann über die erfindungsgemäße bidirektionale optische Kommunikation mit dem Handstück ausgetauscht werden.

Weitere Vorteile, Einzelheiten und Merkmale ergeben sich aus der nachfolgenden Beschreibung eines Ausführungsbeispiels der Erfindung anhand der Zeichnungen.

Es zeigen:
- Fig. 1: eine perspektivische schematische Ansicht einer Ausführungsform eines erfindungsgemäßen Lichthärtgeräts; und
- Fig. 2: eine schematische Darstellung der Lichtquellen und Lichtsensoren des Lichthärtgeräts gemäß Fig. 1.

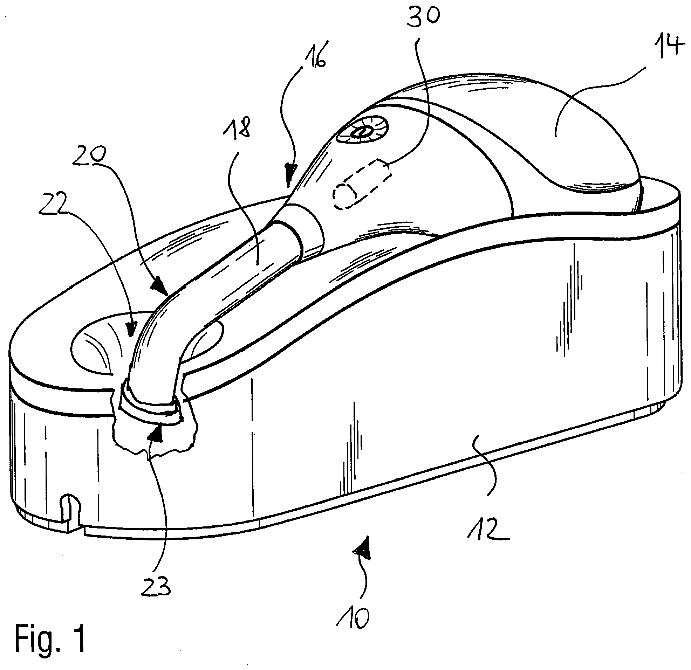

Aus Fig. 1 ist ersichtlich, in welcher Weise ein erfindungsgemäßes Lichthärtgerät 10 grundsätzlich aus einer Basisstation 12 und einem Handstück 14 aufgebaut sein kann. In dem dargestellten Ausführungsbeispiel liegt das Handstück 14 in einer Ladeschale 16 der Basisstation 12. Es ist dem Grunde nach stiftförmig, wobei es aber auch ohne weiteres möglich ist, anstelle dessen ein pistolenförmiges Handstück zu verwenden, mit einer entsprechend angepassten Ladeschale, die die optische Kommunikation zwischen dem vorderen Ende 20 eines Lichtleitstabs 18 und zweiten Lichtquellen und Lichtsensoren in der Basistation 12 erlaubt..

Besonders günstig ist es, wenn das Handstück 14, das stets einen Lichtleitstab 18 oder ein anderes geeignetes Lichtleitelement aufweist, so in der Basisstation 12 in der Ladeposition angeordnet ist, dass das vordere Ende 20 des Lichtleitstabs 18 in eine Vertiefung 22 eintritt, die in oder an der Basisstation 12 angebracht ist.

In der Vertiefung 22 ist unter einer nicht dargestellten Abdeckung zusätzlich zu dem in dem Handstück angeordneten ersten Lichtsensor und der in dem Handstück angeordneten ersten Lichtquelle eine zweite Lichtquelle 24 und ein zweiter Lichtsensor 26 vorgesehen. Diese sind der Lichtaustrittsfläche 23 des vorderen Endes 20 des Lichtleitstabs 18 in dem Ruhezustand des Handstücks 14 auf der Basisstation 12 unmittelbar benachbart. Der zweite Lichtsensor 26 wird von der Strahlung der Haupt-Lichtquelle 30 des Handstücks 14 beaufschlagt, und die zweite Lichtquelle 24 der Basisstation emittiert Licht so, dass es zum großen Teil auf den ersten Lichtsensor fällt, der in dem Handstück 14 angeordnet ist.

Durch die Anordnung des Endes 20 in der Vertiefung 22 ist die Kommunikation gegenüber Fremdlicht zum großen Teil abgeschirmt. Zudem erfolgt jedoch die bidirektionale Kommunikation über gepulste Signale, beispielsweise mittels eines Trägerfrequenzsignals, und lediglich der Wechselspannungsanteil des vom Lichtsensor abgegebenen elektrischen Signals wird ausgewertet. Alternatiuv kann die Kommunikation auch über unmoduliertes Licht erfolgen.

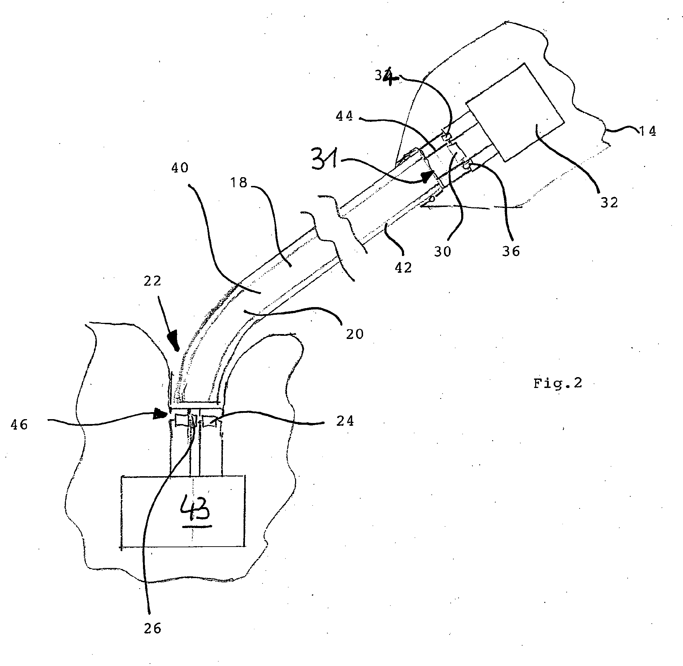

Aus Fig. 2 ist ersichtlich, dass in dem Handstück die Haupt-Lichtquelle 30 zentral angeordnet ist, so dass sie den Lichtleitstab 18 symmetrisch beaufschlagt und zentral die Lichteintrittsfläche 31 beaufschlagt. Ein hier nicht dargestellter Reflektor dient zugleich zur Abschirmung gegenüber seitlichem Fehllicht. Die Haupt-Lichtquelle 30 wird von einer Steuervorrichtung 32 angesteuert.

Am Außenumfang des Lichtleitstabs 18, genauer gesagt an dessen rückwärtigem Ende und der Lichteintrittsfläche 31 benachbart, sind erste Lichtsensoren 34 und 36 in dem Handstück 14 angeordnet, und zwar auf der gleichen Printplatte wie die Haupt-Lichtquelle 30. Es versteht sich, dass die Darstellung lediglich beispielhaft ist, und es können 1 bis 4 oder beispielsweise auch 8 Lichtsensoren in beliebiger geeigneter Weise angeordnet sein. Die Lichtsensoren 34 und 36 sind dafür bestimmt, von der zweiten Lichtquelle 24 emittierte Strahlung zu erfassen.

Wie aus Fig. 2 schematisch ersichtlich ist, ist die zweite Lichtquelle 24 im wesentlichen kreisringförmig aufgebaut oder besteht bevorzugt aus mehreren, beispielsweise drei oder vier, LED-Chips am Außenumfang des Lichtleiters.

Diese Anordnung stellt sicher, dass eine überwiegender Teil der abgegebenen Lichtstrahlung durch den Lichtleiter 18 hindurch den Lichtsensoren 34 und 36 zugeleitet wird.

Der zweite Lichtsensor 26 ist demgegenüber zentral in der Vertiefung 22 angeordnet, so dass er hauptsächlich von der Lichtstrahlung der Hauptlichtquelle beaufschlagt wird.

Wie aus Fig. 2 schematisch ersichtlich ist, sind Lichtleitfasern des Lichtleitstabs 18 zu Bündeln zusammengefasst. Ein Zentralbündel 40 ist dafür bestimmt, die abgegebene Lichtleistung der Hauptlichtquelle 30 zu emittieren und dem vorderen Ende 20 des Lichtleitstabs 18 zuzuleiten. Demgegenüber sind Nebenbündel 42 randseitig des Lichtleitstabs 18 angeordnet, wobei - auch wenn dies aus Fig. 2 nicht ersichtlich ist - die Aufteilung so gewählt ist, dass beispielsweise 90% der Fläche des Lichtleitstabs 18 von dem Zentralbündel 40 eingenommen wird.

Die zweiten Lichtquellen 24 sind deutlich schwächer als die Haupt-Lichtquelle 30, jedoch ausreichend stark, um eine sichere Kommunikation mit den Lichtsensoren 34 und 36 zu ermöglichen, unter Wahrung eines ausreichenden Störabstands. Sie und die zweiten Sensoren 24 stehen mit einer zweiten Steuervorrichtung 43 in der Basisstation 12 in Verbindung.

Aus Fig. 2 ist ferner ersichtlich, dass Abschirmwände 44 an dem Lichteintrittsende des Lichtleitsstabs 18 in dem Handstück, und Abschirmwände 46 an der zweiten Lichtquelle 24 und dem zweiten Lichtsensor 26 vorgesehen sind. Diese dienen dazu, eine seitliche Lichtbeaufschlagung, also unmittelbar beispielsweise von der zweiten Lichtquelle 24 zum zweiten Lichtsensor 26, zu vermeiden, wobei zusätzlich durch unterschiedliche Trägerfrequenzen für eine Diskrimination der Signale gesorgt ist.

## Patentansprüche

1. Lichthärtgerät (10) mit einer Basisstation (12) und einem Handstück (14), wobei das Handstück (14) eine Lichtquelle (30), eine Lichtleitvorrichtung (18), insbesondere einen Lichtleitstab (18), wobei die Lichtleitvorrichtung eine Lichteintrittsfläche (31) aufweist, die sich in Emissionsrichtung der Lichtquelle (30) betrachtet dieser benachbart erstreckt, mindestens einen Lichtsensor (34,36), der der Lichteintrittsfläche (31) benachbart angeordnet ist, und eine Steuervorrichtung (32), aufweist **dadurch gekennzeichnet, dass** die Basisstation (12) mit einer zweiten Lichtquelle (24) und einem zweiten Lichtsensor (26) für die bidirektionale optische Kommunikation mit dem Handstück (14) durch die Lichtleitvorrichtung (18) versehen ist, welche bidirektionale Kommunikation, insbesondere im Frequenzbereich sichtbaren Lichts oder UV-Lichts in modulierter Weise, erfolgt.

2. Lichthärtgerät nach Anspruch 1, **dadurch gekennzeichnet, dass** die zweite Lichtquelle und der zweite Lichtsensor einander benachbart, insbesondere in einem Abstand von weniger als 2cm, an der Basisstation (12) angeordnet sind.

3. Lichthärtgerät nach einem der vorhergehenden Ansprüche, **dadurch gekennzeichnet, dass** die Lichtquelle und der Lichtsensor in dem Handstück (14) nebeneinander angeordnet sind, insbesondere auf der gleichen Printplatte, und dass insbesondere eine optische Abschirmung zwischen dem Lichtsensor und der Lichtquelle angeordnet ist, die sich von einem Bereich zwischen diesen beiden zu einer Lichteintrittsfläche des Lichtleitstabs (18) erstreckt.

4. Lichthärtgerät nach einem der vorhergehenden Ansprüche, **dadurch gekennzeichnet, dass** der zweite Lichtsensor und die zweite Lichtquelle in oder an der Basisstation (12) nebeneinander angeordnet sind und insbesondere eine zweite optische Abschirmung sich zwischen einem Bereich zwischen diesen und einer transparenten Abdeckscheibe oder -Folie für diese erstreckt.

5. Lichthärtgerät nach einem der vorhergehenden Ansprüche, **dadurch gekennzeichnet, dass** die zweite Lichtquelle und der zweite Lichtsensor an der Basisstation (12) in einer Vertiefung (22) angeordnet sind, in die das vordere Ende (20) des Lichtleitstabs (18) passt.

6. Lichthärtgerät nach einem der vorhergehenden Ansprüche, **dadurch gekennzeichnet, dass** der Lichtleitstab (18) Lichtleitfasern aufweist, deren erstes Bündel Licht von der Lichtquelle dem zweiten Lichtsensor zuleitet und deren zweites Bündel Licht von der zweiten Lichtquelle dem ersten Lichtsensor zuleitet.

7. Lichthärtgerät nach einem der vorhergehenden Ansprüche, **dadurch gekennzeichnet, dass** bei an oder in die Basisstation (12) eingelegtem Handstück (14) der Lichtleitstab (18) mit seinem vorderen Ende (20) in optischem Kontakt mit der zweiten Lichtquelle und dem zweiten Lichtsensor ist.

8. Lichthärtgerät nach einem der vorhergehenden Ansprüche, **dadurch gekennzeichnet, dass** die Basisstation (12) ein manuell betätigbares Bedienelement wie einen Auslöseknopf aufweist, mit welchem Zusatzfunktionen, die bei optischer Trennung zwischen Handstück (14) und Basisstation (12) nicht in dem Handstück (14) zur Verfügung stehen, auslösbar sind.

9. Lichthärtgerät nach einem der vorhergehenden Ansprüche, **dadurch gekennzeichnet, dass** die Basisstation (12) eine zweite Steuervorrichtung (32) aufweist, die die erste Steuervorrichtung (32) und damit das Handstück (14) parametrisiert, insbesondere beispielsweise die Lautstärke eines akustischen Ausgabeelements des Handstücks (14) einstellt und/oder das Handstück (14) ausliest, insbesondere die Betriebsstunden des Handstücks (14) erfasst.

10. Lichthärtgerät nach einem der vorhergehenden Ansprüche, **dadurch gekennzeichnet, dass** eine zweite Steuervorrichtung (32) in der Basisstation (12) das Handstück (14), das sich in optischer Kommunikationsverbindung mit der Basisstation (12) befindet, identifiziert und individuelle Handstücke (14) voneinander unterscheidet und getrennt voneinander steuert.

11. Lichthärtgerät nach einem der vorhergehenden Ansprüche, **dadurch gekennzeichnet, dass** die zweite Steuervorrichtung (32) in der Basisstation (12) einen Internetanschluss aufweist, über welchen ein Virenschutzprogramm für das Handstück (14) und/oder die Basisstation (12) aktualisierbar ist und dass das Virenschutzprogramm in der Basisstation (12) regelmäßig wiederkehrend das Handstück (14) und die Basisstation (12) prüft.

12. Lichthärtgerät nach einem der vorhergehenden Ansprüche, **dadurch gekennzeichnet, dass** über die zweite Steuervorrichtung (32) in der Basisstation (12) ein Betriebssystemupdate oder andere Servicefunktionen in dem Handstück (14) ausführbar ist.

13. Lichthärtgerät nach einem der vorhergehenden Ansprüche, **dadurch gekennzeichnet, dass** die erste Steuervorrichtung (32) in dem Handstück (14) eine Gegenprüfung und/oder Zusatzprüfung hinsichtlich der Berechtigung einer zweiten Steuervorrichtung (32) in der Basisstation (12), Änderungen der Programmierung des Handstücks (14) vorzunehmen, prüft und bei fehlender Berechtigung diese abweist.

14. Lichthärtgerät nach einem der vorhergehenden Ansprüche, **dadurch gekennzeichnet, dass** die Basisstation (12) eine insbesondere drahtlose Ladefunktion für einen Akkumulator des Handstücks (14) aufweist.

15. Lichthärtgerät nach einem der vorhergehenden Ansprüche, **dadurch gekennzeichnet, dass** die bidirektionale optische Kommunikation über die Haupt-Lichtquelle (30) des Handstücks (14) erfolgt, also in einem Frequenzbereich, der zwischen 400nm und 520nm liegt, und/oder in einem Nebenwellenlängenbereich, der kurzwelliger als der Wellenlängenbereich des Haupt-Lichtquelle (30) ist.

16. Lichthärtgerät nach Anspruch 15, **dadurch gekennzeichnet, dass** die bidirektionale optische Kommunikation in einem Bereich grünen Lichts über einen LED-Chip erfolgt, das eine Zusatzfunktion gegenüber blauen oder ultraviolett emittierenden Haupt-Emissionschips bietet.

17. Lichthärtgerät nach einem der vorhergehenden Ansprüche, **dadurch gekennzeichnet, dass** die Kommunikation basierend auf einem modulierten Trägersignal bidirektional erfolgt, insbesondere zwei Trägersignale unterschiedliche Frequenz, das für die Übermittlung von Informationen frequehzmoduliert, amplitudenmoduliert oder pulsbreitenmoduliert ist.

## Claims

1. A light curing device (10) comprising a base station (12) and a handpiece (14), the handpiece (14) having a light source (30), a light-conducting device (18), especially a light-conducting rod (18), the light-conducting device having a light entry surface (31), which extends in the light source (30) emission direction, as viewed adjacent thereto, at least one light sensor (34, 36) which Is arranged adjacent to the light entry surface (31), and a control device (32), **characterized in that** the base station (12) is provided with a second light source (24) and a second light sensor (26) for bidirectional optical communication with the handpiece (14) via the light-conducting device (18), which bidirectional communication, especially in the visible light or UV light frequency ranges, occurs in a modulated manner.

2. The light curing device according to claim 1, **characterized in that** the second light source and the second light sensor are arranged adjacent to each other, especially at a distance of less than 2 cm, at the base station (12).

3. The light curing device according to one of the preceding claims, **characterized in that** the light source and the light sensor are arranged adjacent to each other in the handpiece (14), especially on the same printed circuit board, and **in that** especially an optical shield is arranged between the light sensor and the light source which extends from a region therebetween to a light entry surface of the light-conducting rod (18).

4. The light curing device according to one of the preceding claims, **characterized in that** the second light sensor and the second light source are arranged adjacent to each other in or at the base station (12) and especially a second optical shield extends between a region therebetween

5. The light curing device according to one of the preceding claims, **characterized in that** the second light source and the second light sensor are arranged at the base station (12) in a recess (22) into which the front end (20) of the light-conducting rod (18) fits.

6. The light curing device according to one of the preceding claims, **characterized in that** the light-conducting rod (18) comprises optical fibers, the first bundle of which directs light from the light source to the second light sensor and the second bundle of which directs light from the second light source to the first light sensor.

7. The light curing device according to one of the preceding claims, **characterized In that** when inserting a handpiece (14) at or into the base station (12), the light-conducting rod (18) with its front end (20) is in optical contact with the second light source and the second light sensor.

8. The light-curing device according to one of the preceding claims, **characterized in that** the base station (12) has a manually operable operating element, such as an actuator button, by which additional operations can be initiated which are not available in the handpiece (14) in the event of optical separation between handpiece (14) and base station (12).

9. The light-curing device according to one of the preceding claims, **characterized In that** the base station (12) comprises a second control device (32) which parameterizes the first control device (32) and thus the handpiece (14), especially for example adjusts the volume of an acoustic output element of the handpiece (14) and/or reads out the handpiece (14), especially detects the operating hours of the handpiece (14).

10. The light curing device according to one of the preceding claims, **characterized In that** a second control device (32) in the base station (12) identifies the handpiece (14), which is in optical communication connection with the base station (12), and distinguishes individual handpieces (14) from each other and controls them separately from each other.

11. The light curing device according to one of the preceding claims, **characterized in that** the second control device (32) in the base station (12) has an internet connection via which an anti-virus routine for the handpiece (14) and/or the base station (12) can be updated, and **in that** the anti-virus routine in the base station (12) checks the handpiece (14) and the base station (12) regularly and repeatedly.

12. The light curing device according to one of the preceding claims, **characterized in that** an operating system update or other service functions may be performed in the handpiece (14) via the second control device (32) in the base station (12).

13. The light curing device according to one of the preceding claims, **characterized in that** the first control device (32) in the handpiece (14) checks a countercheck and/or an additional check regarding authorization of a second control device (32) in the base station (12) to perform changes to the programming of the handpiece (14), and rejecting them if there is no authorization.

14. The light-curing device according to one of the preceding claims, **characterized in that** the base station (12) has an especially wireless charging function for an accumulator of the handpiece (14).

15. The light-curing device according to one of the preceding claims, **characterized in that** the bidirectional optical communication occurs via the main light source (30) of the handpiece (14), i.e. in a frequency range which is between 400 nm and 520 nm, and/or in a wavelength sub-range which is shorter than the wavelength range of the main light source (30).

16. The light curing device according to claim 15, **characterized in that** the bidirectional optical communication occurs in an area of green light via an LED chip which provides an additional function with respect to blue or ultraviolet-emitting main emission chips.

17. The light curing device according to one of the preceding claims, **characterized in that** the communication occurs bidirectionally based on a modulated carrier signal, especially two carrier signals of different frequency, which is frequency modulated, amplitude modulated or pulse width modulated for the transmission of information.

## Revendications

1. Dispositif de photopolymérisation (10) avec une station de base (12) et une pièce à main (14), où la pièce à main (14) présente une source lumineuse (30), un dispositif conducteur de lumière (18), en particulier une tige conductrice de lumière (18), où le dispositif conducteur de lumière présente une surface d'entrée de la lumière (31) qui s'étend, vu dans le sens d'émission de la source lumineuse (30) adjacente à celle-ci, au moins un capteur photosensible (34, 36) qui est situé à côté de la surface d'entrée de la lumière (31), et un dispositif de commande (32), **caractérisé en ce que** la station de base (12) est munie d'une deuxième source lumineuse (24) et d'un deuxième capteur photosensible (26) pour la communication optique bidirectionnelle avec la pièce à main (14) par le dispositif conducteur de lumière (18), où ladite communication se produit en particulier dans la gamme de fréquences de la lumière visible ou de la lumière UV de manière modulée.

2. Dispositif de photopolymérisation selon la revendication 1, **caractérisé en ce que** la deuxième source lumineuse et le deuxième capteur photosensible sont disposés sur la station de base (12) adjacents l'un à l'autre, en particulier à une distance de moins de 2 cm.

3. Dispositif de photopolymérisation selon l'une des revendications précédentes, **caractérisé en ce que** la source lumineuse et le capteur photosensible sont disposés côte à côte dans la pièce à main (14), en particulier sur la même carte de circuit imprimé, et que, en particulier, un blindage optique est disposé entre le capteur photosensible et la source lumineuse, qui s'étend d'une zone entre ceux-ci à une surface d'entrée de lumière de la tige conductrice de lumière (18).

4. Dispositif de photopolymérisation selon l'une des revendications précédentes, **caractérisée en ce que** le deuxième capteur photosensible et la deuxième source lumineuse sont disposés côte à côte dans ou sur la station de base (12) et en particulier un deuxième blindage optique s'étend entre une zone entre ceux-ci et une vitre ou film de couverture transparent ou un film pour ceux-ci.

5. Dispositif de photopolymérisation selon l'une des revendications précédentes, **caractérisé en ce que** la deuxième source lumineuse et le deuxième capteur photosensible sont disposés sur la station de base (12) dans une cavité (22) dans laquelle l'extrémité avant (20) de la tige conductrice de lumière (18).

6. Dispositif de photopolymérisation selon l'une des revendications précédentes, **caractérisé en ce que** la tige conductrice de lumière (18) présente des fibres optiques, dont le premier faisceau dirige de la lumière de la source lumineuse au deuxième capteur photosensible et son deuxième faisceau dirige de la lumière de la deuxième source lumineuse au premier capteur photosensible.

7. Dispositif de photopolymérisation selon l'une des revendications précédentes, **caractérisé en ce que** lors de loinsertion de la pièce à main (14) sur ou dans la station de base (12) la tige conductrice de lumière (18) est en contact optique avec la deuxième source lumineuse et le deuxième capteur photosensible avec son extrémité avant (20).

8. Dispositif de photopolymérisation selon l'une des revendications précédentes, **caractérisé en ce que** la station de base (12) présente une commande actionné manuellement comme un bouton de déclenchement avec laquelle des fonctions supplémentaires, qui ne sont pas disponibles dans la pièce à main (14) avec la séparation optique entre la pièce à main (14) et la station de base (12), peuvent être déclenchées.

9. Dispositif de photopolymérisation selon l'une des revendications précédentes, **caractérisé en ce que** la station de base (12) présente un deuxième dispositif de commande (32) qui paramètre le premier dispositif de commande (32) et ainsi la pièce à main (14), en particulier par exemple, régule le volume d'un élément de sortie acoustique de la pièce (14) et/ou lit la pièce à main (14), en particulier saisit les heures d'opération de la pièce à main (14).

10. Dispositif de photopolymérisation selon l'une des revendications précédentes, **caractérisé en ce qu'**un deuxième dispositif de commande (32) dans la station de base (12) identifie la pièce à main (14), qui est en connexion de communication optique avec la station de base (12) et différencie des pièces à main (14) individuelles entre elles et les commande séparément les unes des autres.

11. Dispositif de photopolymérisation selon l'une des revendications précédentes, **caractérisé en ce que** le deuxième dispositif de commande (32) présente une connexion Internet dans la station de base (12), par laquelle un logiciel antivirus pour la pièce à main (14) et/ou la station de base (12) peut être mis à jour et que le logiciel antivirus de la station de base (12) contrôle régulièrement la pièce à main (14) et la station de base (12).

12. Dispositif de photopolymérisation selon l'une des revendications précédentes, **caractérisé en ce que** une mise à jour du système d'exploitation ou d'autres fonctions de service est exécutable dans la pièce à main (14) par l'intermédiaire du deuxième dispositif de commande (32) dans la station de base (12).

13. Dispositif de photopolymérisation selon l'une des revendications précédentes, **caractérisé en ce que** le premier dispositif de commande (32) dans la pièce à main (14) contrôle une vérification et/ou un test supplémentaire par rapport à l'autorisation d'un deuxième dispositif de commande (32) dans la station de base (12), d'apporter des modifications à la programmation de la pièce à main (14), et rejette celles-ci en cas d'autorisation manquante.

14. Dispositif de photopolymérisation selon l'une des revendications précédentes, **caractérisé en ce que** la station de base (12) présente une fonction de recharge notamment sans fil pour un accumulateur de la pièce à main (14).

15. Dispositif de photopolymérisation selon l'une des revendications précédentes, **caractérisé en ce que** la communication optique bidirectionnelle se produit par le biais de la source lumineuse principale (30) de la pièce à main (14), c'est-à-dire dans une gamme de fréquences qui se situe entre 400nm et 520nm, et/ou dans une gamme de longueurs d'onde secondaire qui a des ondes plus courtes que celle de la gamme de longueurs d'onde de la source lumineuse principale (30).

16. Dispositif de photopolymérisation selon la revendication 15, **caractérisé en ce que** la communication optique bidirectionnelle est effectuée dans une zone de lumière verte par le biais d'une puce LED, qui propose une fonction supplémentaire par rapport aux puces d'émission principale bleues ou ultraviolettes.

17. Dispositif de photopolymérisation 17 selon l'une des revendications précédentes, **caractérisé en ce que** la communication est effectuée de manière bidirectionnelle sur la base d'un signal porteur modulé, en particulier deux signaux porteurs de fréquence différente, qui est utilisé pour la transmission d'information modulée en fréquence, modulée en amplitude ou modulée en largeur d'impulsion.
